# EUROPÄISCHE PATENTSCHRIFT

(11) **EP 4 501 780 B1**
(45) Veröffentlichungstag und Bekanntmachung des Hinweises auf die Patenterteilung: **15.07.2026**
(21) Anmeldenummer: 23188661.5
(22) Anmeldetag: 31.07.2023
(51) Int. Cl.: B64C 1/40, B64F 5/10

(54) **ISOLATIONSKÖRPER ZUR LÖSBAREN ANORDNUNG AN EINER FLUGZEUGAUSSENHAUT, VERFAHREN ZUR INSTALLATION DES ISOLATIONSKÖRPERS, MONTAGEVORRICHTUNGSMODUL UND MONTAGEVORRICHTUNG**
INSULATING BODY FOR DETACHABLE ARRANGEMENT ON AN AIRCRAFT SKIN, METHOD FOR INSTALLING THE INSULATING BODY, ASSEMBLY DEVICE MODULE AND ASSEMBLY DEVICE
CORPS ISOLANT À DISPOSER DE MANIÈRE AMOVIBLE SUR UNE PEAU EXTÉRIEURE D'AÉRONEF, PROCÉDÉ D'INSTALLATION DU CORPS ISOLANT, MODULE DE DISPOSITIF DE MONTAGE ET DISPOSITIF DE MONTAGE

(43) Veröffentlichungstag der Anmeldung: 05.02.2025
(73) Patentinhaber: Airbus Operations GmbH, 21129 Hamburg (DE)
(72) Erfinder: Benthien, Hermann, 21129 Hamburg (DE); Hegenbart, Matthias, 21129 Hamburg (DE)

(56) Entgegenhaltungen:
- FR-A1- 3 060 522
- US-A1- 2005 005 544
- US-A1- 2005 044 712

## Beschreibung

### Gebiet der Erfindung

Die Erfindung betrifft einen Isolationskörper zur lösbaren Anordnung an einer Flugzeughaut sowie ein Verfahren zur Installation des Isolationskörpers.

### Hintergrund der Erfindung

Bei der Herstellung kommerzieller Passagierflugzeuge werden im Rahmen der Ausrüstungs- und Ausstattungsmontage, unter anderem Isoliermatten eingebaut und Klimarohre verlegt. Dabei werden typischerweise zu Beginn Halter an einer Primärstruktur des Flugzeugs befestigt. Anschließend werden die Isoliermatten an der Primärstruktur angebracht. Danach werden die Klimarohre an der Primärstruktur befestigt. In der Regel ist eine solche Ausrüstung- bzw. Ausstattung mit einem vergleichsweise hohen Installationsaufwand verbunden. Dies erfordert wiederum einen nicht unerheblichen zeitlichen Vorlauf, was kostenintensiv sein kann.

FR 3 060 522 A1 beschreibt, laut der bei espacenet verfügbaren Übersetzung, dass für eine Befestigung von Klimaanlagenkanälen an Flugzeug-Isolierdecken komplexe multifunktionale Befestigungsvorrichtungen erforderlich sind. Eine Isolierdecke für Flugzeuge mit zwei Vorder- und Rückseiten und mindestens vier Seitenflächen ist beschrieben, die die Vorder- und Rückseiten verbinden, dadurch gekennzeichnet, dass in der Dicke der Decke zwischen Vorder- und Rückseite mindestens ein Kanal ausgebildet ist, um den Durchgang von Luft in Längsrichtung der Decke zu ermöglichen.

Es ist die Aufgabe der vorliegenden Erfindung, eine Alternative zu bestehenden Isoliermatten und Klimarohren bereitzustellen, die die vorgenannten Nachteile beseitigt und eine einfachere Ausrüstung- bzw. Ausstattung zulässt. Ferner ist es Aufgabe der Erfindung, ein Verfahren zur Installation einer solchen Alternative sowie eine Vorrichtung zur Durchführung eines derartigen Installationsverfahrens bereitzustellen.

### Beschreibung der Erfindung

Die Aufgabe wird gelöst durch einen Isolationskörper zur lösbaren Anordnung an einer Außenhaut eines Flugzeugs, mit einem Grundkörper zur thermischen Isolierung eines Innenbereichs des Flugzeugs, und mit mindestens einem fluidführenden Klimakanal, der aus einem flexiblen Gewebestoff gebildet ist, wobei der Grundkörper flexibel ausgebildet ist, und wobei der mindestens eine Klimakanal und der Grundkörper integral ausgebildet sind. Auf diese Weise kann durch das Installieren des Isolationskörpers, welcher integral sowohl den Grundkörper zur thermischen Isolierung als auch einen fluidführenden Klimakanal umfasst, gleichzeitig eine Ausstattung bzw. Ausrüstung des Flugzeugs erfolgen. Aufeinanderfolgende Schritte zur Installation von Isoliermatten und Klimarohren sind folglich hinfällig. Dies beschleunigt die Ausrüstung des Flugzeugs und trägt zur Kostensenkung in der Fertigung bei. Erfindungsgemäß wird unter integral ausgebildet verstanden, dass der Grundkörper und der oder die Klimakanäle als integrale Bestandteile des Isolationskörpers ausgebildet sind oder anders ausgedrückt, dass der Grundkörper und der oder die Klimakanäle in integraler Weise den Isolationskörper bilden. Mit anderen Worten: Der Grundkörper und der oder die Klimakanäle sind einstückig ausgebildet oder irreversibel miteinander verbunden. Dazu können der Grundkörper und der oder die Klimakanäle auch beispielsweise miteinander verklebt und/oder vernäht sein. Erfindungsgemäß wird ferner unter flexibel ausgebildet verstanden, dass der Grundkörper beispielsweise elastisch verformbar bzw. reversibel verformbar ist. Dadurch und durch die ebenfalls flexible Beschaffenheit des oder der fluidführenden Klimakanäle (da diese aus einem flexiblen Gewebestoff bestehen), kann der Isolationskörper beispielsweise auf- bzw. abgerollt werden bzw. auf- und abgewickelt werden.

Bei einer bevorzugten Ausführungsform des erfindungsgemäßen Isolationskörpers weist der Grundkörper eine bandartige Grundform auf. Somit kann der Isolationskörper vorteilhaft aufgewickelt bzw. aufgerollt werden, um auf diese Weise besonders gut (zwischen-) gelagert zu werden. Dies erleichtert die Handhabung. Hinzu kommt, dass durch die bandartige Grundform die räumliche Gestalt der Isolationskörper an die zwischen zwei benachbarten Spante eines Flugzeugrumpfs existierenden Zwischenräume angepasst ist und sich somit besonders gut darin einfügt. Erfindungsgemäß wird unter bandartiger Form sozusagen im Grundriss rechteckförmig verstanden. Mit anderen Worten: Der Grundkörper ist streifenförmig oder im Wesentlichen rechteckig ausgebildet.

Bei einer weiteren bevorzugten Ausführungsform des Isolationskörpers ist der mindestens eine Klimakanal als Steigrohrleitung entlang einer langen Seite des Grundkörpers ausgebildet. Die lange Seite des Grundkörpers bezieht sich auf die Rechteck- oder Streifenform des Grundkörpers bzw. des Isolationskörpers an sich. Somit wird der Klimakanal zu einer Steigrohrleitung, die typischerweise im Flugzeug unterhalb des Passagierbodens angeordnete und in Flugzeuglängsrichtung verlaufende Luftverteilungsrohre mit den im Überkopfbereich der Passagiere angeordneten Luftauslässen fluidführend verbindet (Englisch: Riserduct).

Bevorzugt ist auch eine Ausführungsform des Isolationskörpers bei der der flexible Isolationskörper um eine Wickelachse aufwickelbar und abwickelbar ausgebildet ist. Dadurch dass sowohl der Grundkörper als auch die Klimakanäle und mithin der gesamte Isolationskörper flexibel ausgebildet sind, kann der Isolationskörper um die Wickelachse auf- bzw. abgerollt werden bzw. auf- und abgewickelt werden. Die Wickelachse ist folglich parallel zu einer kurzen Seite des rechteckigen Grundkörpers angeordnet.

Die Aufgabe wird auch gelöst durch ein Verfahren zur Installation eines erfindungsgemäßen Isolationskörpers an einer Außenhaut eines Flugzeugs, wobei das Flugzeug an einer Innenseite der Außenhaut eine Mehrzahl an umlaufend ausgebildeten und radial nach innen hervorstehenden Spanten aufweist, die in einer Längsrichtung des Flugzeugs zueinander beabstandet sind, mit den folgenden Verfahrensschritten: Einfügen des Isolationskörpers in einen zwischen zwei benachbarte Spante ausgebildeten Zwischenraum durch kontinuierliches Abwickeln und gleichzeitiges, kontinuierliches Anlegen des Isolationskörpers an die Innenseite der Außenhaut, oder im Wesentlichen mittiges Anordnen des Isolationskörpers entlang eines Spantkopfs des jeweiligen Spants und kontinuierliches, beidseitiges Herumklappen und Abwickeln des Isolationskörpers um den Spantkopf. Durch das erfindungsgemäße Verfahren kann gleichzeitig eine Ausstattung bzw. Ausrüstung des Flugzeugs mit sowohl thermisch isolierenden als auch fluidführenden Isolationskörpern erfolgen. Aufeinanderfolgende Schritte zur Installation von Isoliermatten und Klimarohren entfallen. Die entsprechende Handhabung ist einfach und schnell durchführbar. Dies beschleunigt die Ausrüstung des Flugzeugs und trägt zur Kostensenkung bei.

Bei einer bevorzugten Verfahrensvariante wird der Isolationskörper fortlaufend und umlaufend entlang der Spante abgewickelt. Somit kann die Innenseite der Außenhaut des Flugzeugs nach und nach mit dem Isolationskörper ausgerüstet bzw. ausgestattet werden. Durch die fortlaufende Installation wird auch verhindert, dass sich lokale Ablösungen von der Außenhaut einstellen, die nachträglich beseitigt werden müssten.

Bei einer weiteren, bevorzugten Verfahrensvariante wird der Isolationskörper von einem oberen Kabinenscheitelpunkt entlang der Kabinenseiten bis hin zu einem unteren Kabinenscheitelpunkt abgewickelt. Auf diese Weise lässt sich der Isolationskörper auf ergonomisch günstige Weise an der Innenseite der Außenhaut installieren. Für den Fall, dass während der Installation bereits im Flugzeugrumpf ein entsprechender Boden vorhanden ist, kann die Installation selbstverständlich bei Erreichen des Bodens eingestellt und unterhalb des Bodens entlang der Kabinenseiten bis hin zum unteren Kabinenscheitelpunkt fortgesetzt werden (nachdem der weiter zu installierende Isolationskörper beispielsweise in den so genannten Cargobereich unterhalb des Bodens verlagert wurde).

Bevorzugt ist auch eine Verfahrensvariante, bei der Befestigungsbolzen zur Befestigung des Isolationskörpers eingesetzt werden, wobei die Befestigungsbolzen in an den Spanten ausgebildete Buchsen eingebracht werden. Auf diese Weise ist eine einfache und unmittelbare Befestigung des einzubauenden Isolationskörpers an Ort und Stelle möglich. Dies erleichtert die Ausrüstung bzw. Ausstattung des Flugzeugrumpfs in der Fertigung. Bei den an den Spanten ausgebildeten Buchsen kann es sich beispielsweise um Interface-Punkte einer Substruktur zur Befestigung von Kabinenelementen handeln. Es versteht sich, dass die Befestigungsbolzen mittels eines Gegenhalters oder Sicherungselements gesichert werden können.

Bei einer ebenfalls bevorzugten Verfahrensvariante werden aufeinanderfolgend oder gleichzeitig mehrere Isolationskörper in benachbarte Zwischenräume eingefügt, oder mittig an benachbarten Spantköpfen angeordnet. Die gleichzeitig parallele Installation der Isolationskörper beschleunigt die Ausstattung bzw. Ausrüstung enorm und ist somit besonders vorteilhaft für die Fertigung.

Bevorzugt ist schließlich eine Verfahrensvariante, bei der benachbarte Isolationskörper mittels Klebestreifen und/oder reversiblen Klettverschlüssen miteinander verbunden werden. Auf diese Weise kann ein effektiver Abschluss der isolierenden Schicht bestehend aus der Vielzahl an Isolationskörpern gewährleistet werden. Durch die Klebestreifen und/oder die reversiblen Klettverschlüsse können benachbarte Isolationskörper miteinander verbunden werden und Kältebrücken ausgeschlossen werden.

In einem Beispiel, welches nicht unter den Wortlaut der Ansprüche fällt, ist ein Montagevorrichtungsmodul für ein erfindungsgemäßes Installationsverfahren beschrieben, mit: einer Aufnahmevorrichtung zur Aufnahme eines erfindungsgemäßen Isolationskörpers, einer Grundstruktur, die entlang einer Längsrichtung des Flugzeugs verfahrbar ausgebildet ist, und einem Montagearm der einenends rotierbar mit der Grundstruktur und anderenends mit der Aufnahmevorrichtung verbunden ist. Durch das Montagevorrichtungsmodul kann der erfindungsgemäße Isolationskörper während des erfindungsgemäßen Installationsverfahrens besonders einfach gehandhabt werden. Insbesondere kann mittels des Montagevorrichtungsmoduls gleichzeitig eine Ausstattung bzw. Ausrüstung des Flugzeugs mit den Isolationskörpern erfolgen. Die Ausrüstung des Flugzeugs wird in vorteilhafterweise beschleunigt. Die Grundstruktur des Montagevorrichtungsmoduls weist beispielsweise Rollen oder dergleichen auf, um entlang eines Kabinenbodens oder einer Montagefussbodenstruktur verfahren werden zu können.

In dem Beispiel des Montagevorrichtungsmoduls umfasst die Aufnahmevorrichtung eine Wickelachse, auf der der Isolationskörper auf- und abwickelbar ist. Durch das Vorhandensein einer Wickelachse kann der Isolationskörper besonders leicht an dem Montagevorrichtungsmodul auf- bzw. abgewickelt werden. Beispielsweise kann die Aufnahmevorrichtung als eine Rolle ausgebildet sein, die um die Wickelachse drehbar ausgebildet ist. Der Isolationskörper wird dann einfach auf die Rolle auf- und abgewickelt. Die entsprechende Handhabung bei der Installation ist in vorteilhafter Weise einfach.

In einem Beispiel ist auch ein Montagevorrichtungsmodul, bei dem die Länge des Montagearms veränderbar ist, beschrieben. Auf diese Weise ist das Montagevorrichtungsmodul besonders vorteilhaft an unterschiedliche und ggf. lokal variable Rumpfradien anpassbar. Somit kann ein und dasselbe Montagevorrichtungsmodul für unterschiedliche Rumpfdurchmesser und mithin für unterschiedliche Flugzeugprogramme verwendet werden.

In einem Beispiel ist eine Montagevorrichtung beschrieben, umfassend eine Mehrzahl an erfindungsgemäßen Montagevorrichtungsmodulen, wobei die Längserstreckungsdimension der Grundstruktur im Wesentlichen dem Abstand benachbarter Spante entspricht. Auf diese Weise kann die Längserstreckung der Montagevorrichtung in vorteilhafter Weise auf die Länge einer Rumpfsektion oder innerhalb einer Rumpfsektion auf die Länge eines bestimmten Kabinenbereichs in modularer Weise angepasst sein. Es ist denkbar, dass die Montagevorrichtung je nach Ausrüstungs- bzw. Ausstattungsbedarf individuell angepasst wird und somit ebenfalls für unterschiedliche Fertigungssituationen (beispielsweise unterschiedliche Flugzeugkonfigurationen) bedarfsgerecht angepasst wird.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Beschreibung der Zeichnungen

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrativ und nicht beschränkend sind. In den Ansprüchen schließt das Wort "aufweisend" nicht andere Elemente aus und der unbestimmte Artikel "ein" schließt eine Mehrzahl nicht aus. Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken. Die Figuren sind nicht maßstäblich zu verstehen, sondern haben nur schematischen und illustrativen Charakter. Es zeigen
- Figur 1: eine perspektivische Ansicht eines erfindungsgemäßen Isolationskörpers,
- Figur 2: eine perspektivische Ansicht des Isolationskörpers aus Figur 1 in einer Einbausituation,
- Figur 3: eine perspektivische Ansicht auf eine Mehrzahl von Isolationskörpern, die zwischen Rumpfspanten angeordnet sind,
- Figur 4: einen Teilbereich eines Flugzeugrumpfes im Längsschnitt, während der Installation eines Isolationskörpers,
- Figur 5: einen Querschnitt durch einen Teil eines Flugzeugrumpf vor der Installation eines Isolationskörpers,
- Figur 6: einen Querschnitt durch einen Teil eines Flugzeugrumpf nach der Installation eines Isolationskörpers,
- Figur 7: einen Teilbereich eines Flugzeugrumpfes im Längsschnitt, nach der Installation eines Isolationskörpers,
- Figur 8: ein Montagevorrichtungsmodul mit aufgewickeltem Isolationskörper in einer perspektivischen Ansicht,
- Figur 9: eine alternative Anbringung eines Isolationskörpers an einem Montagevorrichtungsmodul, und
- Figur 10: ein Flugzeug.

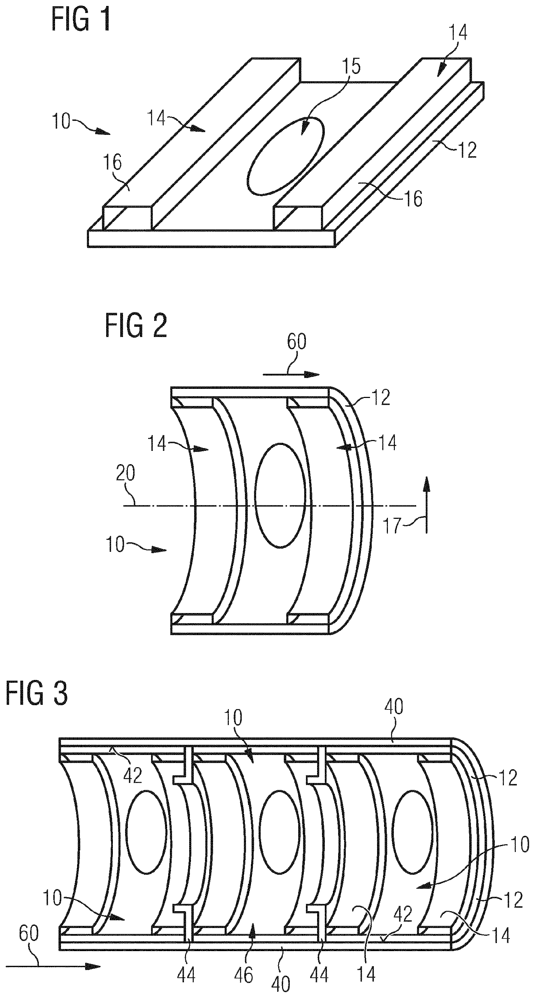

Die **Figur 1** zeigt einen Isolationskörper 10 zur lösbaren Anordnung an einer Außenhaut 40 eines Flugzeugs 50. Der Isolationskörper 10 umfasst einem Grundkörper 12 zur thermischen Isolierung eines Innenbereichs des Flugzeugs 50. Der Grundkörper kann wie in der Figur 1 dargestellt, einen Öffnung 15 aufweisen, die im Einbauzustand an einem Kabinenfenster zu liegen kommt. Ferner umfasst der Isolationskörper 10 mindestens einen fluidführenden Klimakanal 14, der aus einem flexiblen Gewebestoff 16 gebildet ist. Der Grundkörper 12 ist flexibel ausgebildet und weist eine bandartige Grundform auf. Der mindestens eine Klimakanal 14 und der Grundkörper 12 sind als integrale Bestandteile des Isolationskörpers 10 ausgebildet. In der Figur 1 ist der Isolationskörper auf einer nicht dargestellten ebenen Fläche abgewickelt dargestellt.

**In** **Figur** 2 ist der Isolationskörper 10 in einer an eine Innenseite 42 der Außenhaut 40 des Flugzeugs 50 angepassten Form dargestellt, d.h. dass der Isolationskörper 10 gewölbt oder gekrümmt ist. Aufgrund der Flexibilität des Isolationskörpers10 lässt sich dieser an verschiedenste Krümmungsradien der Außenhaut 40 des Flugzeugs 50 anpassen. Die bandartige Form des Grundkörpers 12 bzw. des Isolationskörpers 10 zeigt sich in der Figur 2 in den größeren Dimensionen des Isolationskörpers 10 in der Höhenrichtung 17 als in der Längsrichtung 60. Aufgrund der Flexibilität des Grundkörpers 12 bzw. des Isolationskörpers 10 ist dieser um eine Wickelachse 20 aufwickelbar und abwickelbar ausgebildet. Die zwei Klimakanäle 14 und der Grundkörper 12 sind integrale Bestandteile des Isolationskörpers 10.

Die **Figur** 3 zeigt die Außenhaut 40 eines Flugzeugs 50, wobei das Flugzeug 50 an einer Innenseite 42 der Außenhaut 40 eine Mehrzahl an umlaufend ausgebildeten und radial nach innen hervorstehenden Spanten 44 aufweist. Die Spanten 44 sind in einer Längsrichtung 60 des Flugzeugs 50 zueinander beabstandet angeordnet. In der Figur 3 sind zwei Spante 44 gezeigt. Es versteht sich, dass ein Rumpf eines Flugzeugs 50 typischerweise eine Vielzahl von Spanten 44 aufweist. Zwischen benachbarten Spanten 44 sind Zwischenräume 46 ausgebildet. In der Figur 3 sind mehrere Isolationskörper 10 in benachbarte Zwischenräume 46 eingefügt worden. Dies kann wie nachfolgend näher beschrieben, aufeinanderfolgend oder gleichzeitig geschehen. In der Figur 3 sind die Klimakanäle 14 der Isolationskörper 10 als Steigrohrleitung entlang einer langen Seite der Grundkörper 12 ausgebildet.

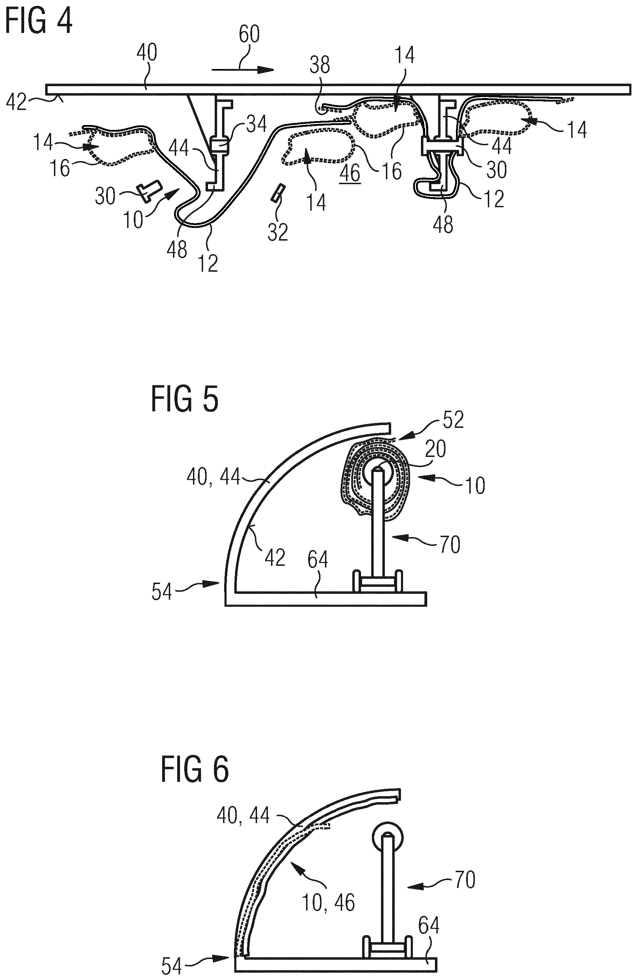

In der **Figur 4** ist ein Installationszustand dargestellt, der sich bei einem Verfahren zur Installation des Isolationskörpers 10 ergibt. Die Isolationskörper 10 werden dabei an einer Außenhaut 40 des Flugzeugs 50, genauer an einer Innenseite 42 der Außenhaut 40 angeordnet. Das Flugzeug 50 weist eine Mehrzahl an umlaufend ausgebildeten und radial nach innen hervorstehenden Spanten 44 auf, die in einer Längsrichtung 60 des Flugzeugs 50 zueinander beabstandet sind. Gemäß dem Verfahren wird in einem ersten Verfahrensschritt der zu installierende Isolationskörper 10 entlang eines Spantkopfs 48 des jeweiligen Spants 44 im Wesentlichen mittig angeordnet und dann in einem zweiten Verfahrensschritt kontinuierlich, beidseitig um den Spantkopf 48 herumgeklappt und abgewickelt. Dies kann grundsätzlich aufeinanderfolgend oder gleichzeitig für mehrere Isolationskörper 10 erfolgen. Dadurch, dass die fluidführenden Klimakanäle 14, aus flexiblem Gewebestoff 16 gebildet sind, und dadurch, dass der Grundkörper 12 ebenfalls flexibel ausgebildet ist, ist die Handhabung beim Installieren besonders gut möglich. Um die Isolationskörper 10 an den Spanten 44 bzw. im Zwischenraum 46 zu fixieren, können Befestigungsbolzen 30 eingesetzt werden, wobei die Befestigungsbolzen 30 in an den Spanten 44 ausgebildete Buchsen 34 eingebracht und mittels eines Gegenhalters 32 gesichert werden (vgl. Situation der rechten Darstellung des Spants in Figur 4). Schließlich können benachbarte Isolationskörper 10 mittels Klebestreifen und/oder reversiblen Klettverschlüssen 38 miteinander verbunden werden.

Die **Figuren 5 und 6** zeigen wie beispielsweise mittels eines nachfolgend näher erläuterten Montagevorrichtungsmoduls 70, Isolationskörper 10 an der Innenseite 42 der Außenhaut 40 angeordnet werden können. Die Isolationskörper 10 werden dabei an einer Außenhaut 40 des Flugzeugs 50, genauer an einer Innenseite 42 der Außenhaut 40 angeordnet. Das Flugzeug 50 weist eine Mehrzahl an umlaufend ausgebildeten und radial nach innen hervorstehenden Spanten 44 auf, die in einer Längsrichtung 60 des Flugzeugs 50 zueinander beabstandet sind. Gemäß dem Verfahren wird der Isolationskörper 10 in einen zwischen zwei benachbarte Spante 44 ausgebildeten Zwischenraum 46 durch kontinuierliches Abwickeln und gleichzeitiges, kontinuierliches Anlegen des Isolationskörpers 10 an die Innenseite 42 der Außenhaut 40 eingefügt. Dabei kann der Isolationskörper 10 fortlaufend und umlaufend entlang oder zwischen benachbarten Spanten 44 abgewickelt werden. Der Isolationskörper 10 kann von einem oberen Kabinenscheitelpunkt 52 entlang der Kabinenseiten 54 bis hin zu einem unteren, nicht dargestellten Kabinenscheitelpunkt abgewickelt werden. In den Figuren 5 und 6 ist gewissermaßen nur ein Viertel des Rumpfquerschnitts des Flugzeugs 50 dargestellt, sodass der untere Kabinenscheitelpunkt nicht dargestellt ist. Es versteht sich jedoch, dass beispielsweise bei fehlendem Flugzeugboden 64 eine entsprechende vollständige Abwicklung des Isolationskörpers 10 bis zum entsprechenden unteren Kabinenscheitelpunkt möglich ist.

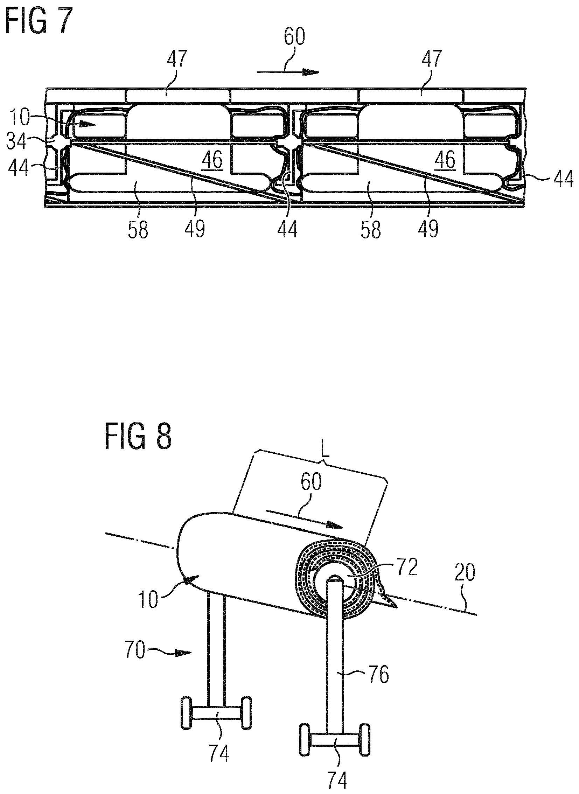

Die **Figur** 7 zeigt einen Installationszustand zweier Isolationskörper 10 nachdem diese gemäß dem Verfahren installiert wurden. Neben der Anordnung der Isolationskörper 10 sind auch die sogenannten Kabinenseitenwand-Paneele 58 angebracht worden, derart dass eine Durchsicht durch die Kabinenfenster 47 möglich ist. Ferner ist eine Stützstruktur 49 aufweisend mehrere Streben installiert worden.

In der **Figur** 8 ist ein Montagevorrichtungsmodul 70 dargestellt, das einen flexiblen Isolationskörper 10 aufnimmt. Dabei ist der Isolationskörper 10 um eine Wickelachse 20 aufgewickelt. Der Isolationskörper 10 kann bei Bedarf wieder um die Wickelachse 20 abgewickelt werden. Das Montagevorrichtungsmodul 70 umfasst eine Aufnahmevorrichtung 72 zur Aufnahme des Isolationskörpers 10. Die Aufnahmevorrichtung 72 weist eine Wickelachse 20 auf, um die der Isolationskörper 10 auf- und abwickelbar ist. Das Montagevorrichtungsmodul 70 umfasst ferner eine Grundstruktur 74, die entlang einer Längsrichtung 60 des Flugzeugs 50 verfahrbar ausgebildet ist. Die Längserstreckungsdimension L der Grundstruktur 74 entspricht im Wesentlichen dem Abstand benachbarter Spante 44 im Flugzeugrumpf. Das Montagevorrichtungsmodul 70 umfasst ferner einen Montagearm 76 der einenends rotierbar mit der Grundstruktur 74 und anderenends mit der Aufnahmevorrichtung 72 verbunden ist. Die Länge des Montagearms 76 ist veränderbar, um auf unterschiedliche Rumpfradien bzw. Rumpfdurchmesser angepasst zu werden.

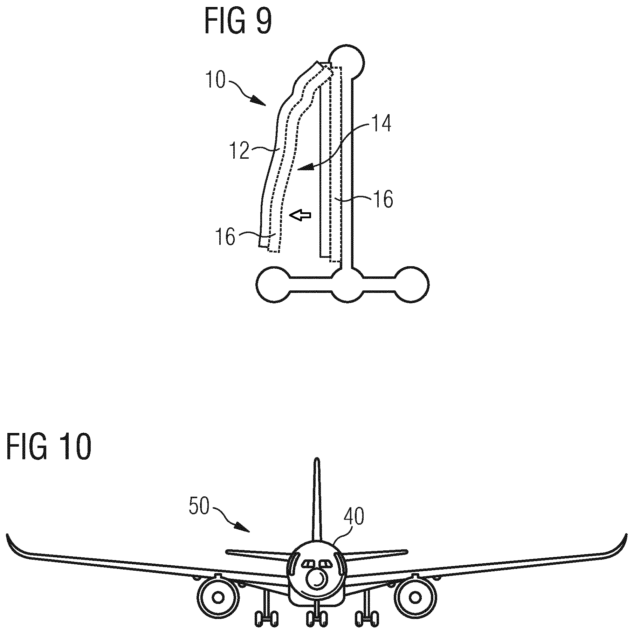

Die **Figur** 9 zeigt eine alternative Anbringung von Isolationskörpern 10 an Montagevorrichtungsmodulen, dergestalt dass diese an einem oberen Punkt des Montagevorrichtungsmoduls hängend anbringbar sind.

Die **Figur** 10 zeigt schließlich ein Flugzeug 50, bei dem mittels einer Montagevorrichtung bzw. eines oder mehrerer Montagevorrichtungsmodule 70 und anhand eines Verfahrens zur Installation von Isolationskörpern 10, mehrere Isolationskörper 10 an der Innenseite 42 der Außenhaut 40 eingefügt bzw. angeordnet wurden.

## Patentansprüche

1. Isolationskörper (10) zur lösbaren Anordnung an einer Innenseite einer Außenhaut (40)
eines Flugzeugs (50), mit:
- einem Grundkörper (12) zur thermischen Isolierung eines Innenbereichs des Flugzeugs (50), und mit
- mindestens einem fluidführenden Klimakanal (14), der aus einem flexiblen Gewebestoff (16) gebildet ist,
wobei der Grundkörper (12) flexibel ausgebildet ist, und
wobei der mindestens eine Klimakanal (14) und der Grundkörper (12) integral ausgebildet sind.

2. Isolationskörper (10) nach Anspruch 1, **dadurch gekennzeichnet, dass** der Grundkörper (10) eine bandartige Grundform aufweist.

3. Isolationskörper (10) nach Anspruch 1 oder 2, **dadurch gekennzeichnet, dass** der mindestens eine Klimakanal (14) als Steigrohrleitung entlang einer langen Seite des Grundkörpers (12) ausgebildet ist.

4. Isolationskörper (10) nach einem der vorhergehenden Ansprüche, **dadurch gekennzeichnet, dass** der flexible Isolationskörper (10) um eine Wickelachse (20) aufwickelbar und abwickelbar ausgebildet ist.

5. Verfahren zur Installation eines Isolationskörpers (10) nach einem der vorhergehenden Ansprüche an einer Außenhaut (40) eines Flugzeugs (50), wobei das Flugzeug (50) an einer Innenseite (42) der Außenhaut (40) eine Mehrzahl an umlaufend ausgebildeten und radial nach innen hervorstehenden Spanten (44) aufweist, die in einer Längsrichtung (60) des Flugzeugs (50) zueinander beabstandet sind, mit den folgenden Verfahrensschritten:
a. Einfügen des Isolationskörpers (10) in einen zwischen zwei benachbarte Spante (44) ausgebildeten Zwischenraum (46) durch kontinuierliches Abwickeln und gleichzeitiges, kontinuierliches Anlegen des Isolationskörpers (10) an die Innenseite (42) der Außenhaut (40), oder:
b. im Wesentlichen mittiges Anordnen des Isolationskörpers (10) entlang eines Spantkopfs (48) des jeweiligen Spants (44) und kontinuierliches, beidseitiges Herumklappen und Abwickeln des Isolationskörpers (10) um den Spantkopf (48).

6. Verfahren nach Anspruch 5, wobei der Isolationskörper (10) fortlaufend und umlaufend entlang der Spante (44) abgewickelt wird.

7. Verfahren nach Anspruch 6, wobei der Isolationskörper (10) von einem oberen Kabinenscheitelpunkt (52) entlang der Kabinenseiten (54) bis hin zu einem unteren Kabinenscheitelpunkt abgewickelt wird.

8. Verfahren nach einem der vorhergehenden Ansprüche 5 bis 7, wobei Befestigungsbolzen (30) zur Befestigung des Isolationskörpers (10) eingesetzt werden, wobei die Befestigungsbolzen (30) in an den Spanten (44) ausgebildete Buchsen (34) eingebracht werden.

9. Verfahren nach einem der vorhergehenden Ansprüche 5 bis 8, wobei aufeinanderfolgend oder gleichzeitig mehrere Isolationskörper (10)
a. in benachbarte Zwischenräume (46) eingefügt werden, oder
b. mittig an benachbarten Spantköpfen (48) angeordnet werden.

10. Verfahren nach einem der vorhergehenden Ansprüche 5 bis 9, wobei benachbarte Isolationskörper (10) mittels Klebestreifen und/oder reversiblen Klettverschlüssen (38) miteinander verbunden werden.

## Claims

1. Insulation body (10) for detachable arrangement on an inner side of an outer skin (40) of an aircraft (50), comprising:
- a base body (12) for thermal insulation of an interior region of the aircraft (50), and
- at least one fluid-carrying climate duct (14), which is formed from a flexible fabric material (16),
- wherein the base body (12) is designed to be flexible, and
- wherein the at least one climate duct (14) and the base body (12) are integrally formed.

2. Insulation body (10) according to claim 1, **characterized in that** the base body (12) has a ribbon-like basic shape.

3. Insulation body (10) according to claim 1 or 2, **characterized in that** the at least one climate duct (14) is designed as a riser duct along a long side of the base body (12).

4. Insulation body (10) according to one of the preceding claims, **characterized in that** the flexible insulation body (10) is designed to be windable and unwindable around a winding axis (20).

5. Method for installing an insulation body (10) according to one of the preceding claims on an outer skin (40) of an aircraft (50), wherein the aircraft (50) has, on an inner side (42) of the outer skin (40), a plurality of circumferentially formed and radially inwardly protruding frames (44) which are spaced apart from one another in a longitudinal direction (60) of the aircraft (50), comprising the following method steps:
- inserting the insulation body (10) into an intermediate space (46) formed between two adjacent frames (44) by continuous unwinding and simultaneous, continuous application of the insulation body (10) to the inner side (42) of the outer skin (40), or:
- substantially central arrangement of the insulation body (10) along a frame head (48) of the respective frame (44) and continuous, double-sided folding and unwinding of the insulation body (10) around the frame head (48).

6. Method according to claim 5, wherein the insulation body (10) is unwound continuously and circumferentially along the frames (44).

7. Method according to claim 6, wherein the insulation body (10) is unwound from an upper cabin apex (52) along the cabin sides (54) down to a lower cabin apex.

8. Method according to one of the preceding claims 5 to 7, wherein fastening bolts (30) are used to fasten the insulation body (10), wherein the fastening bolts (30) are inserted into bushings (34) formed on the frames (44).

9. Method according to one of the preceding claims 5 to 7, wherein sequentially or simultaneously several insulation bodies (10)
a. are inserted into adjacent intermediate spaces (46) or
b. are arranged centrally on adjacent frame heads (48).

10. Method according to one of the preceding claims 5 to 9, wherein adjacent insulation bodies (10) are connected to one another by means of adhesive strips and/or reversible hook-and-loop fasteners (38).

## Revendications

1. Corps isolant (10) pour un agencement amovible sur une face intérieure d'une peau extérieure (40) d'un aéronef (50), comprenant :
- un corps de base (12) pour l'isolation thermique d'une zone intérieure de l'aéronef (50), et
- au moins un conduit de climatisation (14) acheminant un fluide, lequel est formé d'un matériau textile flexible (16),
- dans lequel le corps de base (12) est configuré de manière flexible, et
- dans lequel ledit au moins un conduit de climatisation (14) et le corps de base (12) sont formés d'un seul tenant.

2. Corps isolant (10) selon la revendication 1, **caractérisé en ce que** le corps de base (12) présente une forme de base de type ruban.

3. Corps isolant (10) selon la revendication 1 ou 2, **caractérisé en ce que** ledit au moins un conduit de climatisation (14) est configuré comme un conduit montant le long d'un côté long du corps de base (12).

4. Corps isolant (10) selon l'une des revendications précédentes, **caractérisé en ce que** le corps isolant (10) flexible est configuré pour pouvoir être enroulé et déroulé autour d'un axe d'enroulement (20).

5. Procédé d'installation d'un corps isolant (10) selon l'une des revendications précédentes sur une peau extérieure (40) d'un aéronef (50), dans lequel l'aéronef (50) présente, sur une face intérieure (42) de la peau extérieure (40), une pluralité de cadres (44) formés de manière circonférentielle et faisant saillie radialement vers l'intérieur, lesquels sont espacés les uns des autres dans une direction longitudinale (60) de l'aéronef (50), comprenant les étapes de procédé suivantes :
- insertion du corps isolant (10) dans un espace intermédiaire (46) formé entre deux cadres (44) adjacents par déroulement continu et application continue et simultanée du corps isolant (10) sur la face intérieure (42) de la peau extérieure (40), ou :
- disposition sensiblement centrale du corps isolant (10) le long d'une tête de cadre (48) du cadre (44) respectif et rabattement et déroulement continus des deux côtés du corps isolant (10) autour de la tête de cadre (48).

6. Procédé selon la revendication 5, dans lequel le corps isolant (10) est déroulé de manière continue et circonférentielle le long des cadres (44).

7. Procédé selon la revendication 6, dans lequel le corps isolant (10) est déroulé depuis un sommet supérieur de cabine (52) le long des parois latérales de cabine (54) jusqu'à un sommet inférieur de cabine.

8. Procédé selon l'une des revendications précédentes 5 à 7, dans lequel des boulons de fixation (30) sont utilisés pour la fixation du corps isolant (10), les boulons de fixation (30) étant introduits dans des douilles (34) formées sur les cadres (44).

9. Procédé selon l'une des revendications précédentes 5 à 7, dans lequel plusieurs corps isolants (10) sont successivement ou simultanément
a. insérés dans des espaces intermédiaires (46) adjacents ou
b. sont disposés au centre de têtes de cadres (48) adjacentes.

10. Procédé selon l'une des revendications précédentes 5 à 9, dans lequel des corps isolants (10) adjacents sont reliés entre eux au moyen de bandes adhésives et/ou de fermetures auto-agrippantes réversibles (38).
